# EUROPÄISCHE PATENTSCHRIFT

(11) **EP 1 668 986 B1**
(45) Veröffentlichungstag und Bekanntmachung des Hinweises auf die Patenterteilung: **18.04.2007**
(21) Anmeldenummer: 05020415.5
(22) Anmeldetag: 20.09.2005
(51) Int. Cl.: A22B 5/00

(54) **Vorrichtung zum Freischneiden des Enddarms eines Schlachttieres**
Cutting apparatus for anal orifice of animal
Dispositif pour enlever l'anus des animaux abattus

(30) Priorität: 07.12.2004 DE 202004019195 U
(43) Veröffentlichungstag der Anmeldung: 14.06.2006
(73) Patentinhaber: SCHMID & WEZEL GmbH & Co., 75429 Maulbronn (DE)
(72) Erfinder: Dr. Lay, Norbert, 71149 Bondorf (DE)
(74) Vertreter: Dreiss, Uwe

(56) Entgegenhaltungen:
- EP-A- 0 307 550
- EP-A- 0 492 735
- EP-A- 0 723 743
- EP-A- 1 027 829
- EP-B- 1 115 292

## Beschreibung

Die Erfindung betrifft eine Vorrichtung zum Freischneiden des Enddarms eines Schlachttieres mit einem hohlzylindrischen drehangetriebenen Schneidmesser und mit einem innerhalb des hohlzylindrischen Schneidmessers angeordneten und mit einem Saugkanal versehenen Führungsdorn, bei der der Drehantrieb für das Schneidmesser und den Führungsdorn durch einen Druckluftmotor erfolgt.

Derartige Vorrichtungen sind bekannt (EP 1 115 292 B1, EP 0 457 408 A1).

Aufgabe der Erfindung ist es, die Betriebsweise einer derartigen Vorrichtung zu verbessern und dabei die Führung und Reinigung der Vorrichtung in einfacher Weise zu ermöglichen.

Erfindungsgemäß wird diese Aufgabe dadurch gelöst, dass die Vorrichtung zweiteilig aus Werkzeug und Roboteranschlussplatte gebildet wird, die trennbar zusammenfügbar sind, und dass an der Roboteranschlussplatte eine Anschlussöffnung für Vakuum, eine Anschlussöffnung für Wasser, eine Anschlussöffnung für Druckluft zum Antrieb des Druckluftmotors und eine Anschlussöffnung für die Abluft des Druckluftmotors vorgesehen sind, wobei die genannten Anschlussöffnungen im zusammengefügten Zustand des Werkzeugs und der Roboteranschlussplatte mit zugeordneten Kanälen im Werkzeug in Verbindung stehen, derart, dass
(a) bei Anlegen eines Vakuums an die Anschlussöffnung in der Roboteranschlussplatte eine Verbindung der Anschlussöffnung mit der Saugleitung im Führungsdorn,
(b) bei Zufuhr von Wasser an die Anschlussöffnung in der Roboteranschlussplatte eine Spülung der Saugleitung, der ihr zugeordneten Kanäle, sowie des Innenraums einer das Schneidmesser tragenden Hülse und/oder des Schneidmessers,
(c) bei Anlegen von Druckluft an die Anschlussöffnung für Druckluft in der Roboteranschlussplatte der Antrieb des Druckluftmotors,
(d) über die Anschlussöffnung für die Abluft in der Roboteranschlussplatte die Abführung der Abluft vom Druckluftmotor
bewirkt wird.

Die Erfindung betrifft ferner ein besonders für eine solche Vorrichtung geeignetes Schneidmesser, sowie ein Verfahren zum Freischneiden des Enddarms eines Schlachttieres.

Vorteilhafte Weiterbildungen der Erfindung sind in den Unteransprüchen definiert.

Gemäß der Erfindung kann die Vorrichtung durch einen Roboter exakt geführt und in einer getrennt angeordneten Sterilisierungseinrichtung bei gleichzeitiger Spülung der im Werkzeug vorgesehenen Hohlräume und Kanäle leicht gereinigt werden. Der Austausch des Werkzeugs zu Reparaturzwecken oder zum Austausch des Schneidmessers ist einfach. Die Abmessungen des Schneidmessers sowie die Materialauswahl sind besonders dauerhaft und effektiv.

Ein Ausführungsbeispiel der Erfindung wird in den beigefügten Zeichnungen im Einzelnen beschrieben. Es stellen dar:
- Figur 1: eine perspektivische Explosivdarstellung eines Ausführungsbeispiels;
- Figur 2: eine perspektivische Darstellung des Ausführungsbeispiels nach Figur 1 in zusammengefügtem Zustand von Werkzeug 2 und Roboteranschlussplatte 1;
- Figur 3: einen Querschnitt durch das in Figur 1 gezeigte Werkzeug 2;
- Figur 4: eine Ansicht der Roboteranschlussplatte 1 von rechts oben in Figur 1 und 2 und in Richtung der Pfeile IV-IV in Figur 5;
- Figur 5: einen Schnitt in Richtung der Pfeile V-V in Figur 4;
- Figur 6: einen vergrößerten Bereich des Querschnitts nach Figur 3;
- Figur 7: einen Schnitt in Richtung der Pfeile VII-VII in Figur 6;
- Figur 8: einen Schnitt in Richtung der Pfeile VIII-VIII in Figur 6;
- Figur 9: einen vergrößerten Bereich von Figur 6.

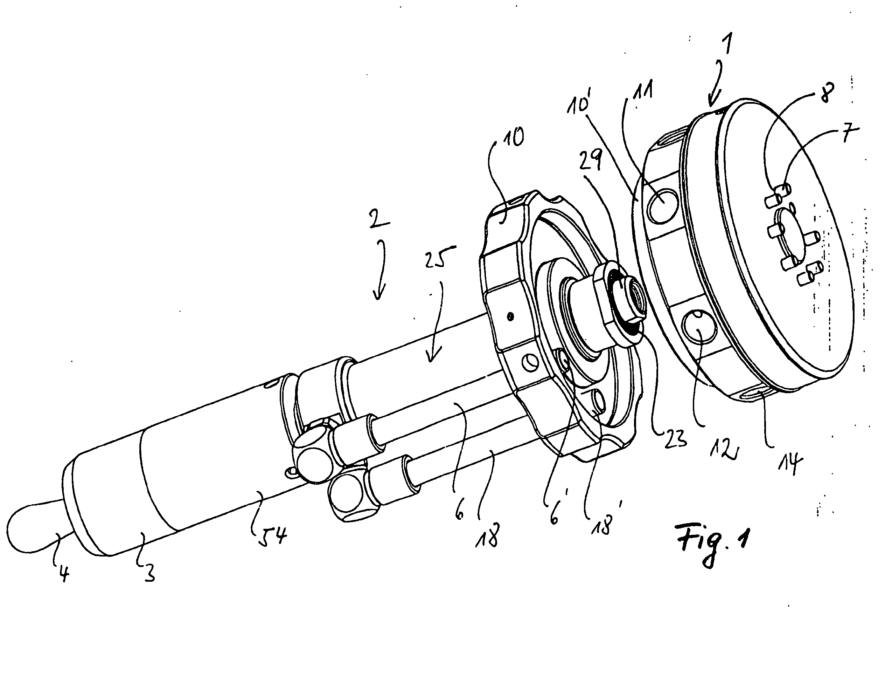

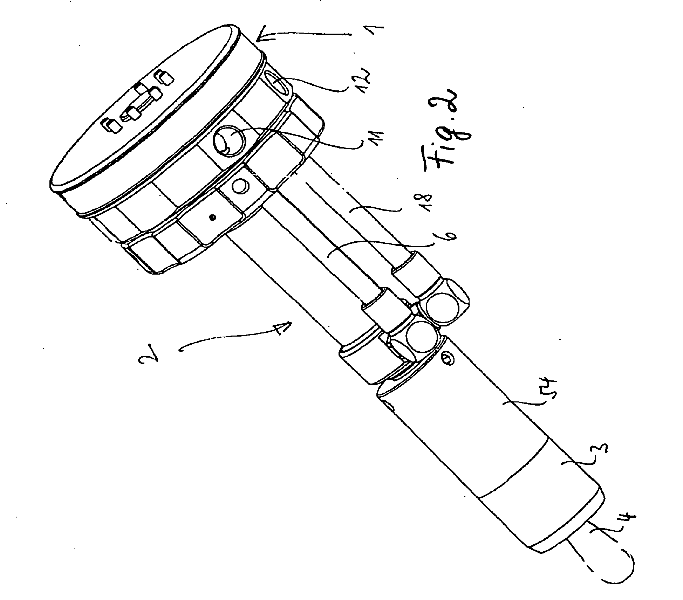

Das Ausführungsbeispiel nach Figur 1 und 2 besteht aus Roboteranschlussplatte 1 und Werkzeug 2. Das Werkzeug 2 ist ein Enddarmfreischneider für Schlachttiere, mit dem bei einem Schlachttier, zum Beispiel einem Schwein, vor der Teilung des Schlachttieres in zwei Hälften der Enddarm vom umgebenden Gewebe gelöst wird. Dazu wird ein Führungsdorn 4 in das Rektum eingeführt und ein drehangetriebenes hohlzylindrisches Schneidmesser 3 entlang des Schlossbeins und der Wirbelsäule des Schlachttieres geführt. Innerhalb des Führungsdorns 4 ist eine Saugleitung 5 vorgesehen, um den Enddarm anzusaugen, dadurch zu halten und gleichzeitig den noch vorhandenen Darminhalt (Kot) über das VakuumAnschlussrohr 6 abzusaugen. Gleichzeitig erfolgt das Freischneiden.

Das Freischneiden des Enddarms macht es möglich, dass beim darauf folgenden Teilen des Schlachttieres, das an den Hinterbeinen aufgehängt ist, in zwei Hälften durch Aufschneiden der Bauchdecke das Darmpaket als Ganzes entlang des Trennschnittes aus dem Körper des Schlachttieres entfernt werden kann (vergleiche EP 0 594 791 und AU 573 603 A1).

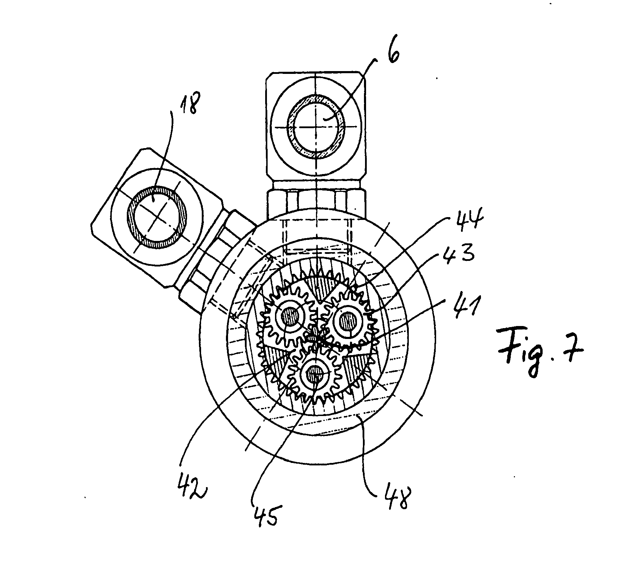

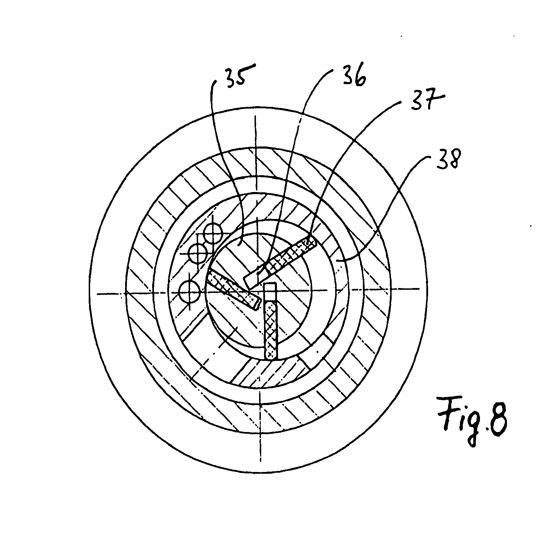

Die Roboteranschlussplatte 1 wird mittels Schrauben 7, die sich durch Öffnungen 8 in der Anschlussplatte 1 hindurcherstrecken (vgl. Figur 4, 5), an einem (nicht gezeigten) Roboter festgeschraubt, so dass die gesamte Vorrichtung beim Freischneiden durch einen Roboter exakt in gewünschter Weise - durch automatische Bilderkennung gesteuert - entlang Schlossbein und Wirbelsäule des Schlachttieres geführt werden kann. Das Werkzeug 2 ist mittels Überwurfmutter 10 am Gewinde 10' der Roboteranschlussplatte 1 festgeschraubt (vgl. Figur 5). Die Roboteranschlussplatte 1 weist - vergleiche auch Figur 4 - folgende Anschlussöffnungen auf: Die Anschlussöffnung 11 für das Anlegen eines Vakuums zum Ansaugen des Enddarms und zum Absaugen von dessen Inhalt; die Anschlussöffnung 12 für Wasser zur Spülung der Vorrichtung; die Anschlussöffnung 13 für Druckluft zum Antrieb des Druckluftmotors 25, der das Schneidmesser 3 und den Führungsdorn 4 antreibt; sowie die Anschlussöffnung 14 für die Abführung der Abluft des Druckluftmotors 25.

Wie aus Figur 5 zu ersehen, steht die Anschlussöffnung 11 für das Vakuum mit einem Kanal 15 in Verbindung. In den Kanal 15 ragt im zusammengefügten Zustand von Werkzeug 2 und Roboteranschlussplatte 1 das mittels einer Dichtung 16 abgedichtete Ende 6' des Vakuumanschlussrohres 6 des Werkzeugs 2 hinein (vgl. Figur 6).

Die Anschlussöffnung 12 für Wasser steht mit einem Kanal 17 in Verbindung, in dem beim Anschließen und Zusammenfügen der Roboteranschlussplatte 1 und des Werkzeugs 2 das ebenfalls durch eine Dichtung abgedichtete Ende 18' (siehe Figur 1) des Wasseranschlussrohres 18 des Werkzeugs 2 hineinragt.

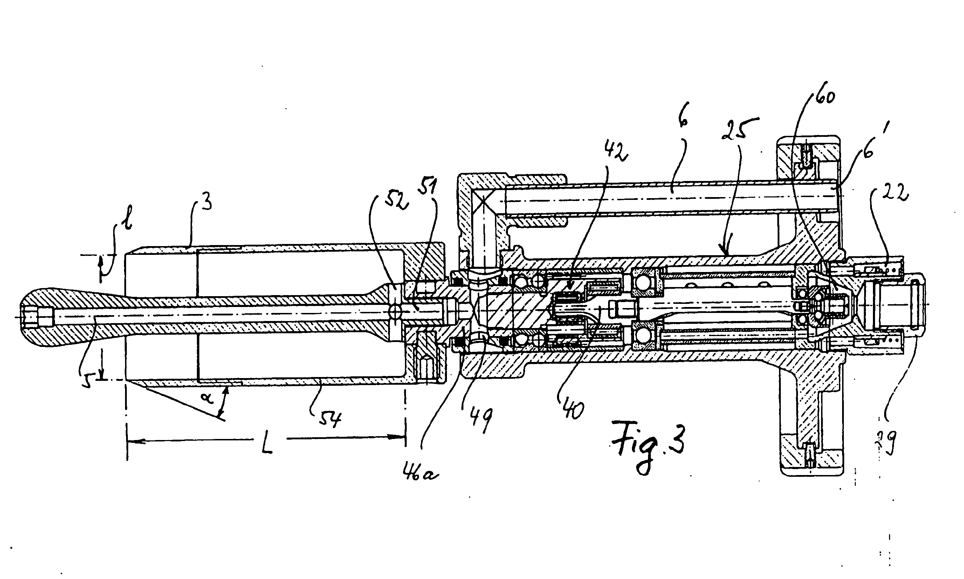

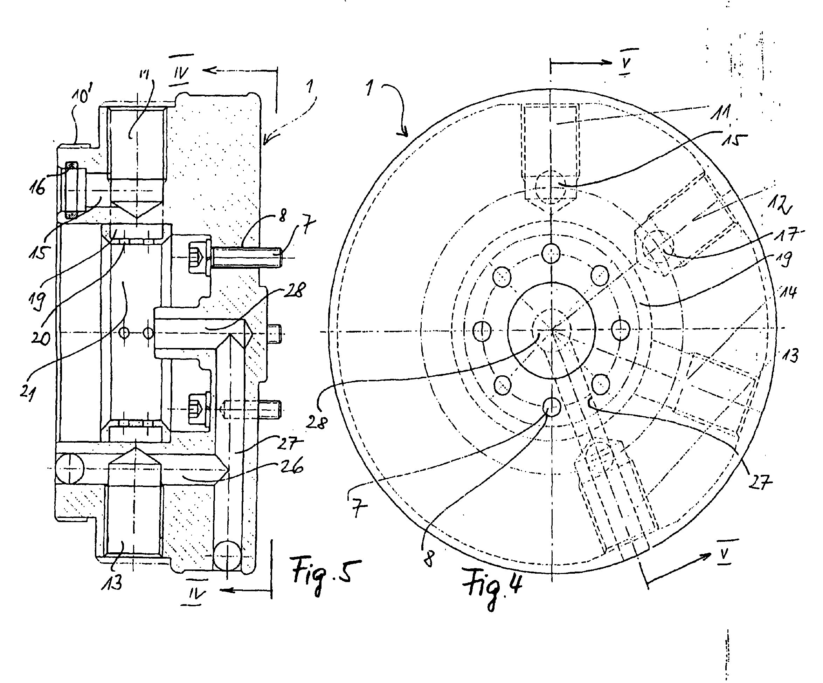

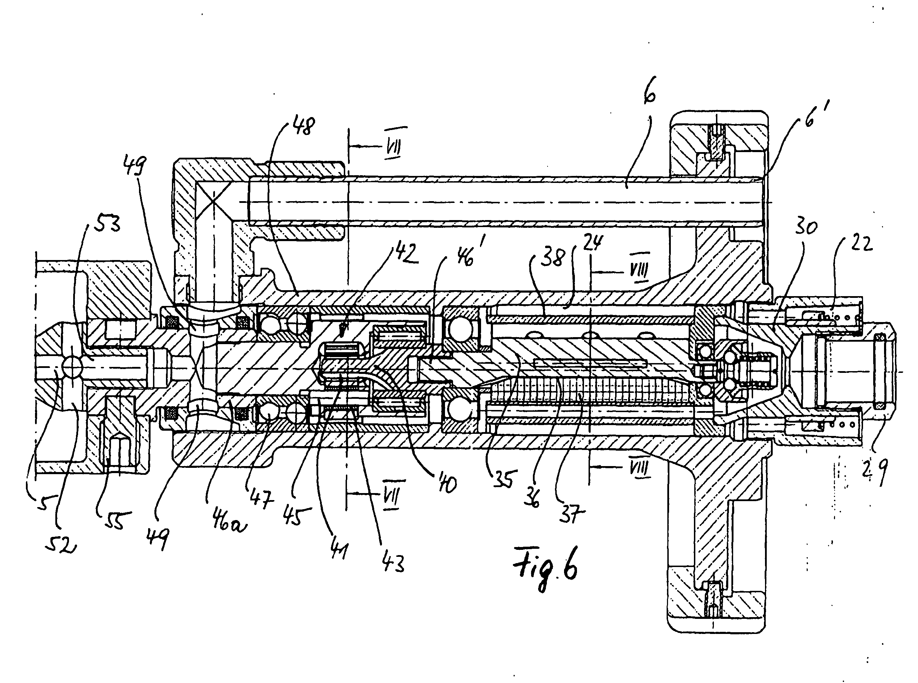

Die Anschlussöffnung 13 für die Druckluft zum Antrieb des Luftdruckmotors 25 steht über Kanäle 27 und 28 nach dem Zusammenfügen von Werkzeug 2 und Roboteranschlussplatte 1 mit dem Innenraum 29' einer Anschlusshülse 29 (Figur 3, 6 und 9) in Verbindung.

Die Anschlussöffnung 14 zur Abführung der Abluft vom Luftdruckmotor 25 im Werkzeug 2 steht mit dem Ringraum 19 in Verbindung, der über Öffnungen 20 mit dem Ringraum 21 in Verbindung steht (vgl. Figur 5). Dieser steht nach Zusammenfügen von Werkzeug 2 und Roboteranschlussplatte 1 seinerseits mit dem Ringraum 22 im Werkzeug 2 in Verbindung. Der Ringraum 22 steht mit Abluftkanälen 24 des Druckluftmotors 25 in Verbindung. Dazwischen ist die Lochplatte 23 angeordnet.

Die Druckluftzuführung über Kanal 28 ist durch eine Dichtung 31 in der Anschlusshülse 29 gegenüber dem Ringraum 21 abgedichtet.

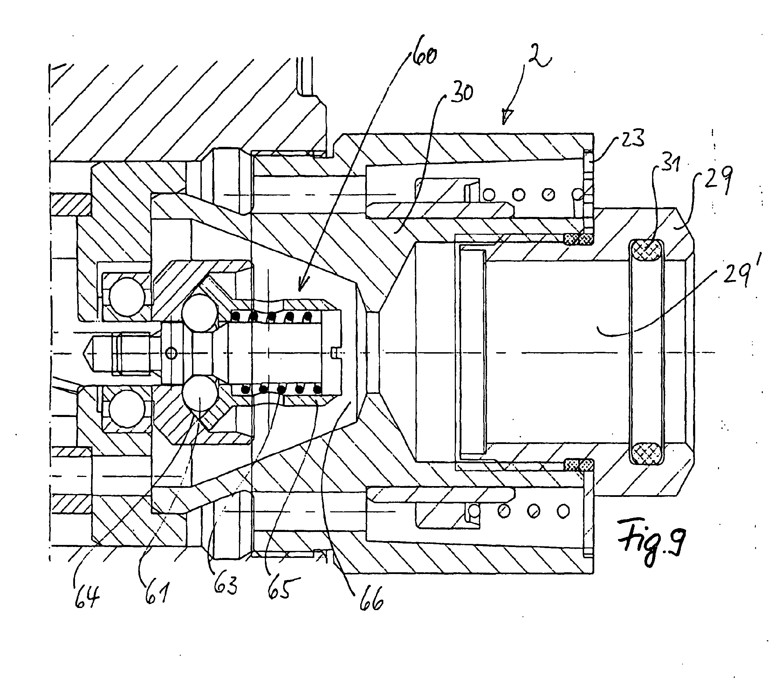

Die folgende Beschreibung geht weitgehend von Figur 3 und - im Detail - von Figur 9 aus. Das im Gehäuse 30 angeordnete Druckregelventil 60 weist Kugeln 61 auf, die mit wachsender Drehzahl gegen die Kraft der Feder 63 nach außen gedrückt werden und sich dabei infolge der Schrägstellung der Flächen 64 die Hülse 65 nach rechts bewegen, so dass damit der Durchgangsquerschnitt 66 für die Druckluft verringert wird und die Drehzahl wieder zurückgeht.

Durch den beschriebenen Eingriff des Endes 6' des Vakuumrohres 6 und des Endes 18' des Wasseranschlussrohres 18 in die zugeordneten Kanäle wird die genaue Lage des Werkzeugs 2 an der Roboteranschlussplatte 1 bestimmt. Es ist natürlich auch möglich, nur eine derartige Fixierung vorzusehen; die hier vorliegende Doppelfixierung und gleichzeitige Abdichtung durch Einstecken eines Rohres beziehungsweise Rohrendes in ein anderes ist jedoch besonders praktisch.

Wie am besten aus Figur 6 und 8 zu ersehen, weist der Druckluftmotor 25 weist einen Rotor 35 auf, in dem entlang seines Umfangs im Abstand voneinander mehrere Schlitze 36 vorgesehen sind. In diesen sind durch die Fliehkraft radial verschiebbare lamellenartige Schieber 37 angeordnet. Der Rotor 35 und die Schieber 37 laufen in einer exzentrischen Bohrung in der Hülse 38, so dass sich zwischen Rotor 35 und Hülse 38 ein im Querschnitt sichelförmiger Raum ergibt, in den die Druckluft über (nicht gezeichnete) Lufteintrittsöffnungen eintritt, dann auf die Schieber 37 in Richtung des Größerwerdens des Raums einwirkt und so den Druckluftmotor 25 antreibt. Die Luft tritt dann durch (nicht gezeichnete) Luftaustrittsöffnungen, die gegenüber den Eintrittsöffnungen versetzt sind, in die Abluftkanäle 24 über und aus. Solche Druckluftmotoren sind dem Fachmann bekannt (z. B. EP 1 457 680 A1), so dass eine detaillierte Beschreibung an dieser Stelle nicht erforderlich ist.

Mit dem Rotor 35 des Druckluftmotors 25 ist, wie weiterhin aus Figur 6 zu ersehen, ein Wellenabschnitt 40 mittels der Schraube 46' verschraubt, der das Sonnenrad 41 eines Planetengetriebes 42 (siehe auch Figur 7) trägt, das im Eingriff mit den drei Planetenrädern 43 steht, die ihrerseits mit dem Hohlrad 44 im Eingriff stehen. Die Planetenräder 43 sind auf Achsen 45, die mit dem Planetenradträger 46 verbunden sind, angeordnet. Der Planetenradträger ist mittels Lager 47 im Gehäuse 48 gelagert. Durch das Planetengetriebe 42 wird die Drehzahl des Druckluftmotors 25 von etwa 17.000 U/min auf ca. 1.400 U/min herabgesetzt. Die vom Planetenradträger 46 angetriebene Messeraufnahme 46a ist entlang ihres Umfangs mit Öffnungen 49 versehen, über die der Innenraum 50 der Aufnafhme 46a mit dem Vakuumanschlussrohr 6 und mit dem Wasseranschlussrohr 18 in Verbindung steht. Ferner steht der Innenraum 50 der Aufnahme 46a mit den Kanälen 51, 52 und 53 im Führungsdorn 4 in Verbindung. Die Aufnahme 46a ist mittels Schrauben 55 mit der Hülse 54 verschraubt. Die Hülse 54 trägt an ihrem linken offenen Ende das hohlzylindrische Schneidmesser 3 (Figur 3). Außerdem ist an der Aufnahme 46a der Führungsdorn 4 angeordnet und dreht mit dieser mit.

Legt man an die Anschlussöffnung 11 über ein Anschlussrohr oder dergleichen von einer Vakuumquelle an ein Vakuum an, so ist dieses über das Vakuumanschlussrohr 6 und die Öffnungen 49 an den Kanälen 51, 52 und 53 wirksam, so dass bei Drehung des hohlzylindrischen Schneidmessers 3 und des Führungsdornes 4 das Freischneiden des Enddarms eines Schlachttieres erfolgen kann. In zeitlichen Abständen wird dieser Vorgang unterbrochen und die gesamte Vorrichtung durch den Roboter in eine Sterilisierungseinrichtung (nicht gezeigt) eingesetzt. Dann wird sterilisiert und die Wasserzufuhr zur Anschlussöffnung 12 über ein Rohr oder einen Schlauch eingeschaltet, so dass während der Sterilisierung über die Anschlussöffnung 12, das Wasseranschlussrohr 18 und die Öffnungen 49 die Kanäle 51, 52 und 53 sowie der Innenraum der Kammer 54 und des hohlzylindrischen Schneidmessers 3 gespült werden. Beispielhaft ist der Winkel des Anschliffs des Schneidmessers 3 α = 20°, bei Verwendung von Edelstahl 1.4112 (gehärtet), der Innendurchmesser 1 = 54 mm, bei einer Gesamtlänge von Schneidmesser 3 und Hülse 54 L = 149 mm.

## Patentansprüche

1. Vorrichtung zum Freischneiden des Enddarms eines Schlachttieres mit einem hohlzylindrischen drehangetriebenen Schneidmesser (3) und einem innerhalb des hohlzylindrischen Schneidmessers angeordneten und mit einem Saugkanal (5) versehenen Führungsdorn (4), bei der das Schneidmesser (3) und der Führungsdorn (4) durch einen Druckluftmotor (25) antreibbar sind, **dadurch gekennzeichnet, dass** die Vorrichtung zweiteilig aus Werkzeug (2) und Roboteranschlussplatte (1) besteht, die trennbar zusammenfügbar sind, und dass an der Roboteranschlussplatte (1) eine Anschlussöffnung (11) für Vakuum, eine Anschlussöffnung (12) für Wasser, eine Anschlussöffnung (13) für Druckluft zum Antrieb des Druckluftmotors (25) und eine Anschlussöffnung (14) für die Abluft des Druckluftmotors (25) vorgesehen sind, wobei die Anschlussöffnungen (11, 12, 13, 14) im zusammengefügten Zustand des Werkzeugs (2) und der Roboteranschlussplatte (1) mit zugeordneten Kanälen oder Durchgängen (6, 6'; 18, 18'; 29; 22) im Werkzeug (2) in Verbindung stehen, derart, dass
i. bei Anlegen eines Vakuums an die Anschlussöffnung in der Roboteranschlussplatte (1) eine Verbindung der Anschlussöffnung (11) mit der Saugleitung (5) im Führungsdorn (4),
ii. bei Zufuhr von Wasser an die Anschlussöffnung (12) in der Roboteranschlussplatte (1) eine Spülung der Saugleitung (5), der ihr zugeordneten Kanäle (51, 52, 53) des Innenraums einer das Schneidmesser tragenden Hülse (54) und/oder des Schneidmessers,
iii. bei Anlegen von Druckluft an die Anschlussöffnung (13) für Druckluft in der Roboteranschlussplatte (1) den Antrieb des Druckluftmotors (25) bewirken und
iv. über die Anschlussöffnung (14) für die Abluft in der Roboteranschlussplatte (1) die Abführung der Abluft vom Druckluftmotor (25)
bewirkt wird.

2. Vorrichtung nach Anspruch 1, **dadurch gekennzeichnet, dass** der mit der Anschlussöffnung (11) für Vakuum in der Roboteranschlussplatte (1) im zusammengefügten Zustand von Werkzeug (2) und Roboteranschlussplatte (1) in Verbindung stehende Kanal (15), in das Ende (6') eines im Werkzeug (2) vorgesehenen Vakuumanschlussrohres (6) hineinragt und darin abgedichtet (16) ist.

3. Vorrichtung nach Anspruch 2, **dadurch gekennzeichnet, dass** das Vakuumanschlussrohr (6) über Öffnungen (49) mit dem Innenraum einer von dem Druckluftmotor (25) angetriebenen Aufnahme (46a) in Verbindung steht, die mit der Saugleitung (5) im Führungsdorn (4) und dem Innenraum einer das hohlzylindrische Schneidmesser (3) tragenden Hülse (54) und/oder des Schneidmessers (3) in Verbindung steht.

4. Vorrichtung nach einem der Ansprüche 1, 2 oder 3, **dadurch gekennzeichnet, dass** die Anschlussöffnung (12) für das Wasser in der Roboteranschlussplatte (1) in zusammengefügtem Zustand von Werkzeug (2) und Roboteranschlussplatte (1) mit einem Kanal in Verbindung steht, in den das Ende (18') eines im Werkzeug (2) vorgesehenen Wasseranschlussrohres (18) hineinragt und darin mittels einer Dichtung abgedichtet ist.

5. Vorrichtung nach Anspruch 4, **dadurch gekennzeichnet, dass** das Wasseranschlussrohr (18) über Öffnungen (49) mit dem Innenraum einer von dem Druckluftmotor (25) angetriebenen Aufnahme (46a) in Verbindung steht, der mit der Saugleitung (5) im Führungsdorn (4) und dem Innenraum (50) einer das hohlzylindrische Schneidmesser (3) tragenden Hülse (54) und/oder dem Innenraum des hohlzylindrischen Schneidmessers (3) in Verbindung steht.

6. Vorrichtung nach Anspruch 1, **dadurch gekennzeichnet, dass** die Lage des Werkzeugs (2) an der Roboteranschlussplatte (1) im zusammengefügten Zustand durch Eingriff des Endes (18') eines im Werkzeug (2) vorgesehenen Wasseranschlussrohres (18) mit dem ihm zugeordneten Kanal in der Roboteranschlussplatte (1) bestimmt wird.

7. Vorrichtung nach Anspruch 1, **dadurch gekennzeichnet, dass** die Lage des Werkzeugs (2) an der Roboteranschlussplatte (1) im zusammengefügten Zustand durch den Eingriff des Endes (6') eines im Werkzeug (2) vorgesehenen Vakuumanschlussrohres (6) mit dem ihm zugeordneten Kanal in der Roboteranschlussplatte (1) bestimmt wird.

8. Vorrichtung nach einem der Ansprüche 1 - 7, **dadurch gekennzeichnet, dass** im zusammengefügten Zustand die Anschlussöffnung (13) für die Druckluft in der Roboteranschlussplatte (1) mit einem in dieser zentral angeordneten Kanal (28) in Verbindung steht, über den die Druckluft zum im Werkzeug (2) vorgesehenen Druckluftmotor (25) zugeführt wird.

9. Vorrichtung nach einem der Ansprüche 1 - 8, **dadurch gekennzeichnet, dass** die Anschlussöffnung (14) für die Abluft in der Druckanschlussplatte (1) mit einem Ringraum (19, 20, 21) in der Roboteranschlussplatte (1) in Verbindung steht, der im zusammengefügten Zustand von Werkzeug (2) und Roboteranschlussplatte (1) über einen im Werkzeug (2) vorgesehenen Ringraum (22) mit dem oder den Abluftkanälen (24) des Druckluftmotors (25) in Verbindung steht.

10. Vorrichtung nach einem der Ansprüche 1 - 9, **dadurch gekennzeichnet, dass** die entlang des äußeren Umfangs des Druckluftmotors (25) vorgesehenen Abluftkanäle (24) mit einem Ringraum (22) in dem zur Roboteranschlussplatte (1) hin gewandten Ende des Werkzeugs (2) in Verbindung stehen.

11. Vorrichtung nach Anspruch 8, **dadurch gekennzeichnet, dass** im Werkzeug (2) in der Zufuhr (66) der Druckluft zum Druckluftmotor (25) ein Druckregelventil (60) vorgesehen ist.

12. Vorrichtung nach einem der Ansprüche 1 - 11, **dadurch gekennzeichnet, dass** der Druckluftmotor (25) über ein dessen Drehzahl herabsetzendes Planetengetriebe (41, 42, 43, 44) einen Planetenradträger (46) antreibt, auf der die Aufnahme (46a) das hohlzylindrische Schneidmesser (3) und der Führungsdorn (4) angeordnet sind.

13. Vorrichtung nach einem der Ansprüche 1 - 9, **dadurch gekennzeichnet, dass** die Zusammenfügung des Werkzeugs (2) mit der Roboteranschlussplatte (1) durch eine am Werkzeug (2) angeordnete Überwurfmutter (10) erfolgt, die in ein Gewinde (10') an der Roboteranschlussplatte (1) eingreift.

14. Schneidmesser für eine Vorrichtung nach Anspruch 1 oder einem der folgenden, **dadurch gekennzeichnet, dass** der Anschliffwinkel (α) des hohlzylindrischen Schneidmessers (3) 18 - 22°, vorzugsweise 20°, beträgt.

15. Verfahren zum Freischneiden des Enddarms eines Schlachttieres mittels eines Werkzeugs (2), das ein drehangetriebenes hohlzylindrisches Schneidmesser (3) sowie einen innerhalb des Schneidmessers angeordneten einen Saugkanal (5) aufweisenden Führungsdorn (4) aufweist, bei dem durch Anlegen von Vakuum an den Saugkanal (5) der Enddarm über dem Führungsdorn gehalten, dessen Inhalt abgesaugt und gleichzeitig durch Drehung des Schneidmessers (3) eine Loslösung des Enddarms von dem ihn umgebenden Gewebe erfolgt, **dadurch gekennzeichnet, dass** das Freischneiden in regelmäßigen Zeitabständen unterbrochen wird und in einer Sterilisierungseinrichtung eine Sterilisierung des Werkzeugs (2) und gleichzeitig eine Spülung des Innenraums der das Schneidmesser (3) tragenden Hülse (54) und/oder des Schneidmessers (3), sowie der zugeordneten Kanäle (51, 52, 53) und der mit abgesaugtem Material in Verbindung kommenden Räume (50) im Werkzeug (2) erfolgt, und bei dem die Zufuhr der Spülflüssigkeit über ein Rohr oder einen Schlauch und eine Anschlussöffnung (12) in einer das Werkzeug (2) tragenden Roboteranschlussplatte (1) erfolgt.

## Claims

1. Device for cutting free the colon of a slaughter animal with a hollow cylindrical rotary-driven cutting knife (3) and a guide pin (4) arranged inside the hollow cylindrical cutting knife and provided with a suction channel (5), in which the cutting knife (3) and the guide pin (4) are drivable through a compressed air motor (25), **characterised in that** the device consists of two components, a tool (2) and a robotic connecting plate (1) that can be separably joined together, and that a connecting opening (11) for vacuum, a connecting opening (12) for water, a connecting opening (13) for compressed air to drive the compressed air motor (25) and a connecting opening (14) for the exhaust air of the compressed air motor (25) are provided on the robotic connecting plate (I), whereby the connecting openings (11, 12, 13, 14) in the assembled state of the tool (2) and the robotic connecting plate (1) are connected to associated channels or passages (6, 6'; 18, 18'; 29; 22) in the tool (2) in such a way that
i. when a vacuum is applied to the connecting opening in the robotic connecting plate (1) a connection of the connecting opening (11) to the suction channel (5) in the guide pin (4),
ii. when water is supplied to the connecting opening (12) in the robotic connecting plate (1) a rinsing of the suction channel (5) and the channels (51, 52, 53) attached to it, the interior of a casing (54) bearing the cutting knife and/or of the cutting knife,
iii. when compressed air is applied to the connecting opening (13) for compressed air in the robotic connecting plate (1) driving of the compressed air motor (25) and
iv. via the connecting opening (14) for the exhaust air in the robotic connecting plate (1), the extraction of exhaust air from the compressed air motor (25)
is caused.

2. Device according to Claim 1, **characterised in that** in the assembled state of the tool (2) and robotic connecting plate (1) the channel (15) connected with the connecting opening (11) for vacuum in the robotic connecting plate (1) extends into the end of a vacuum connecting tube (6') provided in the tool (2) and is sealed (16) therein.

3. Device according to Claim 2, **characterised in that** the vacuum connecting tube (6) is connected via openings (49) to the interior of a receptacle (46a) driven by the compressed air motor (25), which is connected to the suction channel (5) in the guide pin (4) and to the interior of a casing (54) bearing the hollow cylindrical cutting knife (3) and/or of the cutting knife (3).

4. Device according to one of Claims 1, 2 or 3, **characterised in that** in the assembled state of the tool (2) and robotic connecting plate (1) the connecting opening (12) for the water in the robotic connecting plate (1) is connected to a channel, into which the end (18') of a water connecting tube (18) provided in the tool (2) extends and is sealed therein by means of a washer.

5. Device according to Claim 4, **characterised in that** the water connecting tube (18) is connected via openings (49) to the interior of a receptacle (46a) driven by the compressed air motor (25), which is connected to the suction channel (5) in the guide pin (4) and to the interior (50) of a casing (54) bearing the hollow cylindrical cutting knife (3) and/or to the interior of the hollow cylindrical cutting knife (3).

6. Device according to Claim 1, **characterised in that** the position of the tool (2) on the robotic connecting plate (1) in the assembled state is determined by contact of the end (18') of a water connecting tube (18) provided in the tool (2) with the channel assigned to it in the robotic connecting plate (1).

7. Device according to Claim 1, **characterised in that** the position of the tool (2) on the robotic connecting plate (1) in the assembled state is determined by contact of the end (6') of a vacuum connecting tube (6) provided in the tool (2) with the channel assigned to it in the robotic connecting plate (1).

8. Device according to one of the Claims 1 - 7, **characterised in that**, in the assembled state, the connecting opening (13) for the compressed air in the robotic connecting plate (1) is connected to one of these centrally aligned channels (28), via which the compressed air is supplied to the compressed air motor (25) provided in the tool (2).

9. Device according to one of the Claims 1 - 8, **characterised in that** the connecting opening (14) for the exhaust air in the pressure connecting plate (1) is connected to an annular space (19, 20, 21) in the robotic connecting plate (1) that, in the assembled state of the tool (2) and the robotic connecting plate (1), is connected by an annular space (22) provided in the tool (2) to the exhaust channel(s) (24) of the compressed air motor (25).

10. Device according to one of the Claims 1 - 9, **characterised in that** the exhaust channels (24) provided along the outer periphery of the compressed air motor (25) are connected with an annular space (22) in the end of the tool (2) turned towards the robotic connecting plate (1).

11. Device according to Claim 8, **characterised in that** a pressure regulating valve (60) is provided in the tool (2) in the supply (66) of compressed air to the compressed air motor (25).

12. Device according to one of the Claims 1 -11, **characterised in that** the compressed air motor (25) drives a planetary wheel bearing (46) via a planetary gearing (41, 42, 43, 44) whose revolution speed decreases, on which the receptacle (46a), the hollow cylindrical cutting knife (3) and the guide pin (4) are arranged.

13. Device according to one of the Claims 1 - 9, **characterised in that** the joining of the tool (2) with the robotic connecting plate (1) is carried out by a coupling ring (10) arranged in the tool (2) that engages a screw thread (10') on the robotic connecting plate (1).

14. Cutting knife for a device according to Claim 1 or one of the following, **characterised in that** the angle of the blade edge (α) of the hollow cylindrical cutting knife (3) is 18-22°, preferably 20°.

15. Process for cutting free the colon of a slaughter animal by means of a tool (2) that has a rotary-driven, hollow cylindrical cutting knife (3) as well as a guide pin (4) that has a suction channel (5) arranged inside the cutting knife, with which, when a vacuum is applied to the suction channel (5) the colon is held by the guide pin and the contents thereof are sucked out and by turning the cutting knife (3) at the same time, detachment of the colon from the surrounding tissue is carried out, **characterised in that** the cutting free is interrupted at regular intervals and the tool (2) is sterilised in a sterilising device and the interior of the casing (54) bearing the cutting knife (3) and/or the cutting knife (3) are simultaneously rinsed, as well as the attributed channels (51, 52, 53) and the space (50) in the tool (2) that has come into contact with the removed material, and in which the supply of rinsing liquid is carried out via a tube or a hose and a connecting opening (12) in a robotic connecting plate (1) bearing the tool (2).

## Revendications

1. Dispositif pour le découpage libre du gros intestin d'un animal de boucherie avec un couteau (3) cylindrique creux entraîné par rotation et un mandrin de guidage (4) disposé à l'intérieur du couteau cylindrique creux et doté d'un canal d'aspiration (5), sur lequel le couteau (3) et le mandrin de guidage (4) peuvent être entraînés par un moteur à air comprimé (25), **caractérisé en ce que** le dispositif est constitué de deux parties de l'outil (2) et de la plaque de raccordement de robot (1), qui peuvent être assemblées séparément, et **en ce que** sur la plaque de raccordement de robot (1) sont prévues une ouverture de raccordement (11) pour le vide, une ouverture de raccordement (12) pour l'eau, une ouverture de raccordement (13) pour l'air comprimé pour l'entraînement du moteur à air comprimé (25) et une ouverture de raccordement (14) pour l'air sortant du moteur à air comprimé (25), les ouvertures de raccordement (11, 12, 13, 14) étant en liaison avec des canaux ou des passages (6, 6' ; 18, 18' ; 29 ; 22) attribués dans l'outil (2), lorsque l'outil (2) et la plaque de raccordement de robot (1) sont assemblés, de telle sorte que
i. en cas d'application d'un vide sur l'ouverture de raccordement dans la plaque de raccordement de robot (1), on a une liaison de l'ouverture de raccordement (11) avec la conduite d'aspiration (5) dans le mandrin de guidage (4),
ii. en cas d'arrivée d'eau sur l'ouverture de raccordement (12) dans la plaque de raccordement de robot (1), on a un lavage de la conduite d'aspiration (5), des canaux (51, 52, 53), qui lui sont attribués, de l'espace intérieur d'une douille (54) portant le couteau et/ou du couteau.
iii. en cas d'application d'air comprimé sur l'ouverture de raccordement (13) pour l'air comprimé dans la plaque de raccordement de robot (1), on a l'entraînement du moteur à air comprimé (25) et
iv. l'évacuation de l'air sortant du moteur à air comprimé (25) est effectuée par l'ouverture de raccordement (14) pour l'air sortant dans la plaque de raccordement de robot (1).

2. Dispositif selon la revendication 1, **caractérisé en ce que** le canal (15) mis en liaison avec l'ouverture de raccordement (11) pour le vide dans la plaque de raccordement de robot (1), lorsque l'outil (2) et la plaque de raccordement de robot (1) sont assemblés, dépasse à l'intérieur de l'extrémité (6') d'un tuyau de raccordement de vide (6) prévu dans l'outil (2) et est rendu étanche (16) à l'intérieur.

3. Dispositif selon la revendication 2, **caractérisé en ce que** le tuyau de raccordement de vide (6) est en liaison par des ouvertures (49) avec l'espace intérieur d'un logement (46a) entraîné par le moteur à air comprimé (25), lequel logement est en liaison avec la conduite d'aspiration (5) dans le mandrin de guidage (4) et l'espace intérieur d'une douille (54) portant le couteau (3) cylindrique creux et/ou du couteau (3).

4. Dispositif selon l'une quelconque des revendications 1, 2 ou 3, **caractérisé en ce que** l'ouverture de raccordement (12) pour l'eau dans la plaque de raccordement de robot (1) est en liaison avec un canal lorsque l'outil (2) de la plaque de raccordement de robot (1) sont assemblés, canal à l'intérieur duquel dépasse l'extrémité (18') d'un tuyau de raccordement d'eau (18) prévu dans l'outil (2), laquelle est rendue étanche au moyen d'un joint.

5. Dispositif selon la revendication 4, **caractérisé en ce que** le tuyau de raccordement d'eau (18) est en liaison par des ouvertures (49) avec l'espace intérieur d'un logement (46a) entraîné par le moteur à air comprimé (25), qui est en liaison avec la conduite d'aspiration (5) dans le mandrin de guidage (4) et l'espace intérieur (50) d'une douille (54) portant le couteau (3) cylindrique creux et/ou l'espace intérieur du couteau (3) cylindrique creux.

6. Dispositif selon la revendication 1, **caractérisé en ce que** la position de l'outil (2) sur la plaque de raccordement de robot (1) est déterminée, dans l'état assemblé, par l'engagement de l'extrémité (18') d'un tuyau de raccordement d'eau (18) prévu dans l'outil (2) avec le canal qui lui est attribué dans la plaque de raccordement de robot (1).

7. Dispositif selon la revendication 1, **caractérisé en ce que** la position de l'outil (2) sur la plaque de raccordement de robot (1) est déterminée dans l'état assemblé par l'engagement de l'extrémité (6') d'un tuyau de raccordement de vide (6) prévu dans l'outil (2) avec le canal qui lui est attribué dans la plaque de raccordement de robot (1).

8. Dispositif selon l'une quelconque des revendications 1 à 7, **caractérisé en ce que**, dans l'état assemblé, l'ouverture de raccordement (13) pour l'air comprimé dans la plaque de raccordement de robot (1) est en liaison avec un canal (28) disposé de façon centrale dans cette plaque, canal par lequel l'air comprimé est amené au moteur à air comprimé (25) prévu dans l'outil (2).

9. Dispositif selon l'une quelconque des revendications 1 à 8, **caractérisé en ce que** l'ouverture de raccordement (14) pour l'air sortant dans la plaque de raccordement de pression (1) est en liaison avec un espace annulaire (19, 20, 21) situé dans la plaque de raccordement de robot (1), lequel espace est en liaison par un espace annulaire (22) prévu dans l'outil (2) avec le canal ou les canaux d'air sortant (24) du moteur à air comprimé (25) lorsque l'outil (2) et la plaque de raccordement de robot (1) sont assemblés.

10. Dispositif selon l'une quelconque des revendications 1 à 9, **caractérisé en ce que** les canaux d'air sortant (24) prévus le long du pourtour extérieur du moteur à air comprimé (25) sont en liaison avec un espace annulaire (22) dans l'extrémité, tournée en direction de la plaque de raccordement de robot (1), de l'outil (2).

11. Dispositif selon la revendication 8, **caractérisé en ce qu'**une vanne de réglage de pression (60) est prévue dans l'outil (2) dans l'arrivée (66) de l'air comprimé au moteur à air comprimé (25).

12. Dispositif selon l'une quelconque des revendications 1 à 11, **caractérisé en ce que** le moteur à air comprimé (25) entraîne au moyen d'un engrenage planétaire (41, 42, 43, 44) réduisant son régime un support de roue planétaire (46) sur lequel le logement (46a), le couteau (3) cylindrique creux et le mandrin de guidage (4) sont disposés.

13. Dispositif selon l'une quelconque des revendications 1 à 9, **caractérisé en ce que** l'assemblage de l'outil (2) avec la plaque de raccordement de robot (1) s'effectue par un écrou raccord (10) disposé sur l'outil (2), qui s'engage dans un filetage (10') sur la plaque de raccordement de robot (1).

14. Couteau pour un dispositif selon la revendication 1 ou l'une des revendications suivantes, **caractérisé en ce que** l'angle d'affûtage (α) du couteau cylindrique creux (3) varie de 18 à 22°, de préférence 20°.

15. Procédé pour le découpage libre du gros intestin d'un animal de boucherie au moyen d'un outil (2), qui présente un couteau (3) cylindrique creux entraîné par rotation et un mandrin de guidage (4) présentant un canal d'aspiration (5) disposé à l'intérieur du couteau, mandrin, dans lequel, par application de vide sur le canal d'aspiration (5), le gros intestin est maintenu sur le mandrin de guidage, son contenu est aspiré et un détachement du gros intestin du tissu qui l'entoure s'effectue simultanément par la rotation du couteau (3), **caractérisé en ce que** le découpage libre est interrompu à des intervalles de temps réguliers et une stérilisation de l'outil (2) intervient dans un dispositif de stérilisation et en même temps un lavage de l'espace intérieur de la douille (54) portant le couteau (3) et/ou du couteau (3), ainsi que des canaux (51, 52, 53) attribués et des espaces (50) en liaison avec du matériau évacué par aspiration dans l'outil (2) et dans lequel l'arrivée du liquide de lavage s'effectue par un tuyau ou un flexible et une ouverture d'aspiration (12) dans une plaque de raccordement de robot (1) portant l'outil (2).
